# EUROPÄISCHE PATENTANMELDUNG

(11) **EP 0 919 359 A2**
(43) Veröffentlichungstag der Anmeldung: **02.06.1999**
(21) Anmeldenummer: 98122245.8
(22) Anmeldetag: 23.11.1998
(51) Int. Cl.: B29C 65/18, B31B 1/84, B65D 5/74

(54) **Verfahren zum Einschweissen eines Anschlusselements**

(30) Priorität: 27.11.1997 DE 19752648
(71) Anmelder: PAUL KIEFEL GMBH, D-83395 Freilassing (DE)
(72) Erfinder: Hinterseer, Heinz, 83395 Freilasing (DE)
(74) Vertreter: Patentanwälte Leinweber & Zimmermann

(57) **Zusammenfassung**

Die Erfindung betrifft ein Verfahren zum Verschweißen eines Anschlußelements (16) mit mindestens einer Wand (18,20) eines Behälters aus wärmeschmelzbarer Folie, bei dem das Anschlußelement (16) mit der Wand in Kontakt gebracht und zum Verschweißen mit der Wand mittels einer Heizeinrichtung erwärmt wird.

Erfindungsgemäß wird das Anschlußelement (16) vorgewärmt, bevor es mit der Wand in Kontakt gebracht wird.

## Beschreibung

Die Erfindung betrifft ein Verfahren zum Verschweißen eines Anschlußelements mit mindestens einer Wand eines Behälters aus wärmeschmelzbarer Folie, bei den das Anschlußelement mit der Wand in Kontakt gebracht und zum Verschweißen mit der Wand mittels einer Heizeinrichtung erwärmt wird.

Verfahren der eingangs genannten Art sind bekannt, beispielsweise aus der DE 40 40 687 C1.

Dabei stellt sich das Problem, daß die Heizeinrichtung in aller Regel auf der dem Anschlußelement gegenüberliegenden Seite der Wand des Behälters liegt, so daß eine Beheizung des Anschlußelements nur indirekt, nämlich über die Wand des Behälters möglich ist. Das Anschlußelement hat aber in aller Regel eine erheblich größere Wandstärke als der Behälter und damit auch eine wesentlich größere Wärmekapazität. Um das Anschlußelement auf Schweißtemperatur zu bringen, muß daher entweder die Heizeinrichtung sehr lang auf die Wand des Behälters einwirken oder es muß mit einer relativ hohen Temperatur gearbeitet werden, wodurch die Gefahr besteht, daß das die Wand bildende Material Schaden nimmt (beispielsweise Verdampfen, Verbrennen etc.).

Mithin stellt sich der Erfindung die Aufgabe, das eingangs genannte Verfahren derart weiterzubilden, daß nicht mehr die Gefahr einer Beschädigung der Wand besteht, dennoch aber nur eine vergleichsweise kurze Zeit des Beheizens mittels der Heizeinrichtung erforderlich ist.

Erfindungsgemäß wird die gestellte Aufgabe dadurch gelöst, daß das Anschlußelement vorgewärmt wird, bevor es mit der Wand in Kontakt gebracht wird.

Dabei liegt der Erfindung die verblüffend einfache Erkenntnis zugrunde, daß die für die Verschweißung dem Anschlußelement zuzuführende Energie umso geringer ist, je wärmer das Anschlußelement zu Beginn des Verschweißens ist. Dadurch kann zum einen die Heizzeit minimiert werden. Ferner muß die Heizeinrichtung die Wand nicht über die Maßen erwärmen, um das Anschlußelement auf Schweißtemperatur zu bringen.

Bevorzugt erfolgt die Vorwärmung zumindest teilweise mittels einer Kontaktheizeinrichtung.

Bei Verwendung einer Kontaktheizeinrichtung erfolgt die Wärmeeinleitung vergleichsweise langwellig. Als Folge davon ist die Eindringtiefe in das Anschlußelement vergleichsweise gering. Daher kann die Vorwärmung derart erfolgen, daß zwar die zu verschweißende Oberfläche des Anschlußelements stark erhitzt wird, so daß sie in etwa auf Schweißtemperatur ist, gleichzeitig aber das Innere des Anschlußelements vergleichsweise kühl bleibt, so daß die Gesamtstabilität des Anschlußelements erhalten bleibt. Auf diese Weise ist es nicht erforderlich, stabilisierende Maßnahmen zu ergreifen, wie etwa die Verwendung eines Dorns, auf den das Anschlußelement aufgesteckt wird. Im übrigen gibt es eine Reihe von Anschlußelementen, die nicht auf einen Dorn gesteckt werden können, wie beispielsweise Anschlußelemente mit einer Ventileinrichtung.

Die Vorwärmung kann aber erfindungsgemäß auch zumindest teilweise berührungslos erfolgen.

So kann sie beispielsweise mittels einer Infrarot-Heizeinrichtung und/oder mittels eines erhitzten Gases erfolgen. Die Kombinationen sind prinzipiell beliebig.

Nach einem besonders bevorzugten Ausführungsbeispiel der Erfindung wird zum Vorwärmen und zum Verschweißen ein und dieselbe Heizeinrichtung verwendet.

Mit anderen Worten wird bei dieser Ausgestaltung in einem ersten Schritt das Anschlußelement mittels einer Heizeinrichtung vorgewärmt, dann wird die Heizeinrichtung mit der Wand des Behälters in Kontakt gebracht, woraufhin eine abermalige Beheizung mit derselben Heizeinrichtung erfolgt. Diese Zweifachverwendung der Heizeinrichtung führt zu entsprechend geringeren Kosten für eine Anlage zur Ausführung des erfindungsgemäßen Verfahrens.

Sowohl für die Vorwärmung als auch für die Wärmebehandlung zum Schweißen selbst kann die Verwendung von Ultraschall und/oder von Vibrationen vorgesehen sein.

Im folgenden ist die Erfindung anhand zweier bevorzugter Ausführungsbeispiele unter Bezugnahme auf die beiliegende Zeichnung mit weiteren Einzelheiten näher erläutert. Dabei zeigen
Fig. 1a eine Schnittansicht durch eine Heizeinrichtung mit darin befindlichem Anschlußelement,
Fig. 1b den Schnitt nach Fig. 1a, jedoch in einem Stadium, in dem eine Wand eines Behälters mit dem genannten Anschlußelement verschweißt wird, und
Fig. 2 schematisch eine Seitenansicht einer anderen Anlage zur Ausführung des erfindungsgemäßen Verfahrens.

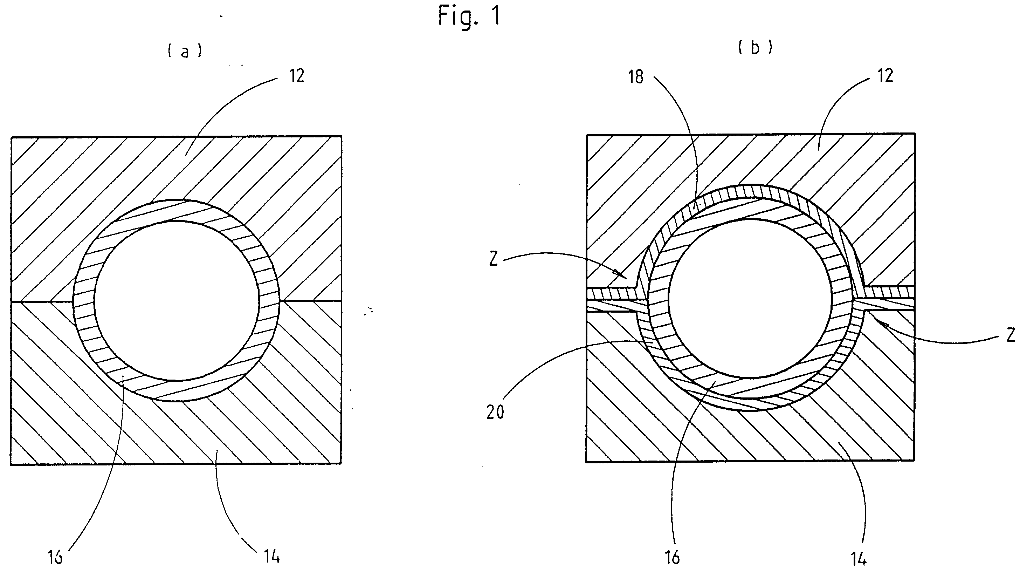

Fig. 1a zeigt eine zwei Gesenke 12 und 14 aufweisende Kontaktheizeinrichtung, in die ein Anschlußelement 16 eingelegt ist. Das Anschlußelement 16 wird mittels dar Heizeinrichtung 12, 14 zumindest an seiner äußeren Mantelfläche auf eine Temperatur erwärmt, die im Bereich der Schweißtemperatur liegt. Das Erwärmen nur an der äußeren Mantelfläche hat den Vorteil, daß das Anschlußelement 16 in sich stabil bleibt, weil ja der innere Bereich nicht oder nur kaum erwärmt wird. Dadurch ist es nicht erforderlich, einen (stabilisierenden) Dorn für das Anschlußelement 16 zu benutzen. Vielmehr stellt das Anschlußelement 16 bzw. sein Inneres selbst ein Widerlager dar, mittels dessen Druck aufgebaut werden kann, wenn sich die Gesenke 12 und 14 um das Anschlußelement 16 herum schließen.

Das Anschlußelement 16 ist in Fig. 1a mit kreisförmigem Querschnitt wiedergegeben. Genausogut kann das Anschlußelement aber auch jede beliebige andere Form haben. Weitere Beispiele sind eine ovale Form oder eine Augenform (eye-shape), d.h. eine Form, bei der ein im Querschnitt kreisrundes Zentrum von etwa sinusförmigen Wänden auf zwei einander entgegengesetzten Seiten umgeben ist.

Wie bereits oben erwähnt, wird das Anschlußelement 16 zunächst mittels der Gesenke 12 und 14 allein vorgewärmt, d.h. es wird erhitzt, ohne daß es zu diesem Zeitpunkt schon in Kontakt mit einer Folie wäre.

Danach erfolgt dann das eigentliche Verschweißen, wie es in Fig. 1b dargestellt ist. Gemäß Fig. 1b wird nämlich das Anschlußelement 16 zusammen mit Folien 18 und 20 in die Kontaktheizeinrichtung mit den Gesenken 12 und 14 verbracht.

An dieser Stelle sei ausdrücklich darauf hingewiesen, daß die Darstellung nach Fig. 1b nicht maßstabsgerecht ist. Insbesondere beträgt nämlich die Wandstärke der Folien 18 und 20 nur etwa ein Fünftel der Wandstärke des Anschlußelements 16.

Bei der in Fig. 1b gezeigten Anordnung ist nur noch wenig Wärmeenergie notwendig, um die Folien 18 und 20 mit dem Anschlußelement 16 zu verschweißen. Die Folien 18 und 20 werden nämlich zum einen von den Gesenken 12 und 14, zum anderen aber auch von dem Anschlußelement 16 erwärmt, das wegen seiner größeren Wandstärke eine erheblich höhere Wärmekapazität hat. Insbesondere werden die Folien 18 und 20 auch in den Problemzonen Z in für die Verschweißung ausreichendem Maße erwärmt. In diesen Problemzonen Z fehlte es bei dem Stand der Technik, also ohne Vorwärmung des Anschlußelements 16 häufig an der notwendigen Wärmeenergie, so daß hier häufig Undichtigkeiten aufgetreten sind.

Die Gesenke 12 und 14 sind nach den Figuren 1a und 1b miteinander identisch. Mit anderen Worten wird nach dem oben beschriebenen Verfahren sowohl zum Vorwärmen als auch zum eigentlichen Verschweißen jeweils ein und dieselbe Heizeinrichtung verwendet. Alternativ kann aber vorgesehen sein, das Anschlußelement 16 nach dem Vorwärmen aus der die Gesenke 12 und 14 aufweisenden Kontaktheizeinrichtung herauszunehmen und in eine andere Einrichtung zu verbringen, welche eine andere Temperatur hat und in der es dann mit den Folien 18 und 20 verschweißt wird.

Auch können andere Heizeinrichtungen verwendet werden, wie etwa Infrarot-Heizeinrichtungen, Heizeinrichtungen, die mit einem heißen gasförmigen Medium arbeiten und - bei polaren Werkstoffen - Hochfrequenz-Heizeinrichtungen. Ferner kann (zusätzlich) zur Einleitung von Energie auch von Ultraschallwellen und Vibrationen Gebrauch gemacht werden.

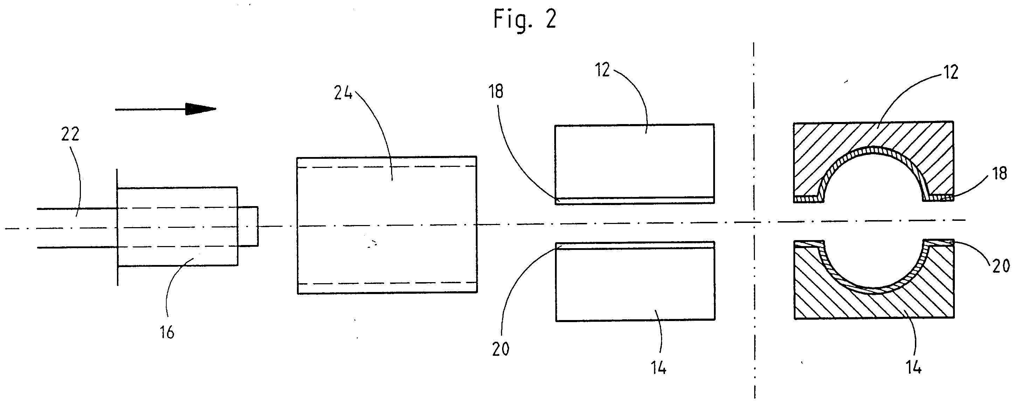

Eine Ausgestaltung unter Verwendung zweier Heizeinrichtungen ist in Fig. 2 schematisch dargestellt. Gemäß Fig. 2 wird beispielsweise ein im Querschnitt kreisrundes Anschlußelement 16 mittels eines Dorns 22 durch eine rohrförmige Infrarot-Heizeinrichtung 24 hindurchgeführt, bevor es in eine Kontaktheizeinrichtung mit Gesenken 12 und 14 gelangt. Das durch die Heizeinrichtung 24 bereits vorgewärmte Anschlußelement 16 wird dann mittels der Gesenke 12 und 14 mit Folien 18 bzw. 20 verschweißt. Ganz rechts in Fig. 2 sind die Gesenke 12 und 14 mit den Folien 18 und 20 noch einmal gezeigt, jedoch in Axialrichtung gesehen.

Nach der Verschweißung des Anschlußelements 16 mit den Folien 18 und 20 kann sowohl bei dem Verfahren nach Fig. 1 als auch bei dem Verfahren nach Fig. 2 noch ein Kühlschritt vorgesehen sein.

Die Art und Weise, wie das Anschlußelement 16 und die Folien 18 und 20 jeweils in die Heizeinrichtungen eingebracht werden, sind allgemein bekannt und sollen daher hier nicht näher erläutert werden.

Insgesamt ergeben sich mehrere Vorteile durch die Anwendung des erfindungsgemäßen Verfahrens:
1. Da wegen der Vorwärmung nicht mehr so viel Energie zugeführt werden muß, kann das eigentliche Schweißen in wesentlich kürzerer Zeit erfolgen.
2. Es besteht nicht die Gefahr, daß die Folie überhitzt wird, weil die Wärmeenergie zur Erwärmung des Anschlußelements nicht mehr ausschließlich durch die Folie hindurch dem Anschlußelement zugeführt werden muß.
3. Wegen der nicht mehr so hohen Temperatur der Kontaktheizungsgesenke kann auf Trennelemente zwischen der Folie und den Gesenken verzichtet werden, wodurch die Folie besser an die Außenkontur des Anschlußelements angedrückt werden kann, was insbesondere im Hinblick auf die Problemzonen Z von Vorteil ist.
4. Wie bereits oben unter 3. erwähnt, können Trennelemente wegfallen, was insgesamt zu einer Vereinfachung führt.
5. Wegen der Vorheizung kann mit großer Präzision vorhergesagt werden, welche Energiemenge, also welche Heiztemperatur und welche Heizzeit, für das eigentliche Verschweißen erforderlich ist, wodurch eine präzise Steuerung des Schweißverfahrens möglich ist. Dadurch ist die Reproduzierbarkeit gegenüber dem Stand der Technik erheblich erhöht.

Die in der vorstehenden Beschreibung, den Ansprüchen sowie der Zeichnung offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Verfahren zum Verschweißen eines Anschlußelements (16) mit mindestens einer Wand (18, 20) eines Behälters aus wärmeschmelzbarer Folie, bei dem
das Anschlußelement (16) mit der Wand (18, 20) in Kontakt gebracht und zum Verschweißen mit der Wand (18, 20) mittels einer Heizeinrichtung (12, 14) erwärmt wird,
dadurch gekennzeichnet, daß
das Anschlußelement (16) vorgewärmt wird, bevor es mit der Wand (18, 20) in Kontakt gebracht wird.

2. Verfahren nach Anspruch 1, dadurch gekennzeichnet, daß die Vorwärmung zumindest teilweise mittels einer Kontaktheizeinrichtung (12, 14) erfolgt.

3. Verfahren nach Anspruch 1, dadurch gekennzeichnet, daß die Vorwärmung zumindest teilweise berührungslos erfolgt.

4. Vorrichtung nach einem der vorangehenden Ansprüche, dadurch gekennzeichnet, daß die Vorwärmung mittels einer Infrarot-Heizeinrichtung (24) erfolgt.

5. Verfahren nach einem der vorangehenden Ansprüche, dadurch gekennzeichnet, daß die Vorwärmung mittels eines erhitzten Gases erfolgt.

6. Verfahren nach einem der vorangehenden Ansprüche, gekennzeichnet durch die Verwendung von Ultraschall und/oder Vibrationen zum Erwärmen.

7. Verfahren nach einem der vorangehenden Ansprüche, dadurch gekennzeichnet, daß zum Vorwärmen und zum Verschweißen ein und dieselbe Heizeinrichtung (12, 14) verwendet wird.
